# EUROPÄISCHE PATENTSCHRIFT

(11) **EP 2 844 682 B1**
(45) Veröffentlichungstag und Bekanntmachung des Hinweises auf die Patenterteilung: **13.12.2017**
(21) Anmeldenummer: 13714881.3
(22) Anmeldetag: 22.03.2013
(51) Int. Cl.: C08G 18/02, C08G 18/10, C08G 18/76, C08G 18/79, C08K 5/29, C08L 67/02, C08G 18/75, C08G 18/28, C08G 18/42, C08G 18/66

(54) **VERWENDUNG VON CARBODIIMID-HALTIGEN ZUSAMMENSETZUNGEN ZUR STEUERUNG DER TOPFZEIT**
USE OF CARBODIIMIDE CONTAINING COMPOSITIONS FOR CONTROLLING POT LIFE
UTILISATION DE COMPOSITIONS CONTENANT DES CARBODIIMIDES POUR CONTROLER LA VIE EN POT

(30) Priorität: 03.05.2012 EP 12166635
(43) Veröffentlichungstag der Anmeldung: 11.03.2015
(73) Patentinhaber: LANXESS Deutschland GmbH, 50569 Köln (DE)
(72) Erfinder: LAUFER, Wilhelm, 67158 Ellerstadt (DE); HAAS, Uwe, 68723 Offersheim (DE)
(86) Internationale Anmeldenummer: PCT/EP2013/056156
(87) Internationale Veröffentlichungsnummer: WO 2013/164136

(56) Entgegenhaltungen:
- EP-A1- 0 792 909
- EP-A1- 0 850 985
- EP-A1- 1 614 733
- EP-A1- 2 256 142
- WO-A2-2005/003204
- JP-A- 9 255 752
- US-A1- 2009 234 074
- US-A1- 2010 144 980
- US-B1- 6 248 819

## Beschreibung

Die Erfindung betrifft die Verwendung von Carbodiimid-haltigen Zusammensetzungen zur Steuerung der Topfzeitbei der Herstellung von Polyurethan(PU)-basierten Systemen, vorzugsweise PU-Elastomeren, PU-Klebstoffen, PU-Gießharzen oder PU-Schäumen.

Polyurethane entstehen durch Polyadditions- bzw. Polykondensationsreaktion von Polyisocyanaten mit mehrwertigen Alkoholen, den Polyolen, nahezu quantitativ. Die Verknüpfung erfolgt durch die Reaktion einer Isocyanatgruppe (-N=C=O) eines Moleküls mit einer Hydroxygruppe (-OH) eines anderen Moleküls unter Bildung einer Urethangruppe (-NH-CO-O-).

Der Reaktionsverlauf zwischen Diisocyanat und Polyol ist abhängig von dem Molverhältnis der Komponenten. Zwischenstufen mit gewünschtem Durchschnittsmolekulargewicht und gewünschten Endgruppen können durchaus erhalten werden. Diese Zwischenstufen können dann zu einem späteren Zeitpunkt mit einem Diol oder Diamin umgesetzt (kettenverlängert) werden, wobei dann das gewünschte Polyurethan bzw. Polyurethan-Polyharnstoff-Hybrid gebildet wird. Die Zwischenstufen werden im Allgemeinen als Prepolymer bezeichnet.

Geeignete Polyole für die Herstellung von Prepolymeren sind neben den Diolen auch Polyalkylenglykolether, Polyetherester oder Polyester mit endständigen Hydroxylgruppen (Polyesterpolyole).

Für die Herstellung von mechanisch oder dynamisch belastbaren Polyurethanen werden vorzugsweise Polyesterpolyole eingesetzt.

Die durch Polykondensation von einfachen Diolen und Carbonsäuren hergestellten Polyetherester oder Polyester mit endständigen Hydroxylgruppen enthalten noch freie Carbonsäuren. Diese katalysieren die Reaktion zwischen den im Prepolymer enthaltenen freien Isocyanatgruppen und dem für die Kettenverlängerung benötigten Diamin, was zu kurzen Topfzeiten führt und die Reaktion unkontrollierbar macht. Zudem haben diese häufig eine geringe Hydrolysestabilität.

Die zurzeit auf dem Markt erhältlichen Carbodiimide, wie in EP-A 0799843 beschrieben, sind für den schnellen Säureabbau in der für die Herstellung von Prepolymeren vorgegebenen Zeit zu reaktionsträge, oder wegen zu geringer Löslichkeit nicht anwendbar und unwirtschaftlich.

Aufgabe der vorliegenden Erfindung war daher Zusammensetzungen bereitzustellen, die sich für die Herstellung von Polyurethan(PU)-basierten Systemen, insbesondere für die Herstellung von PU-Elastomeren, PU-Klebstoffen oder PU-Gießharzen oder PU-Schäumen, eignen, die hydrolysestabil und wirtschaftlich herstellbar sind, die über eine handhabbare Topfzeit verfügen, ohne dass dabei Materialien benötigt werden, die teuer und schwer herzustellen sind.

Überraschenderweise konnte diese Aufgabe durch die Verwendung bestimmter Carbodiimidhaltiger Zusammensetzungen gelöst werden.

Gegenstand der vorliegenden Erfindung ist daher die Verwendung von Zusammensetzungen zur Steuerung der Topfzeit enthaltend
mindestens ein Polyol und
mindestens ein Carbodiimid der Formel (I)

R¹-(O)-OC-HN-(R-N=C=N-)ₘ-R-NH-CO-(O)-R¹ (I),

mit m = 1 - 40,
R für C₆-C₁₈-Alkylen oder C₆-C₁₈-Cycloalkylen, vorzugsweise 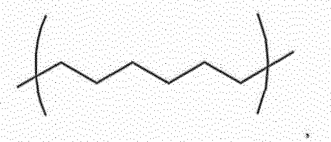 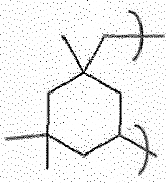 oder 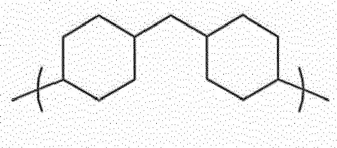 steht,
R¹ für C₁-C₄-Alkyl sowie einen Rest -(CH₂)ₕ-O-[(CH₂)ₖ-O]_{g}-R² steht,
mit h = 1-3, k= 1-3, g = 5-20 und R² für H oder C₁-C₄-Alkyl, vorzugsweise CH₃, steht und mindestens ein Diisocyanat.

In einer weiteren bevorzugten Ausführungsform der Erfindung handelt es sich bei dem eingesetzten Carbodiimid um eine Verbindung der Formel (I), in der
m = 10-30,
R für C₆-C₁₈-Alkylen oder C₆-C₁₈-Cycloalkylen, vorzugsweise 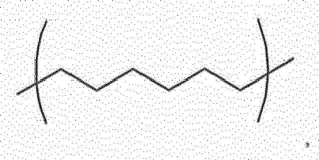 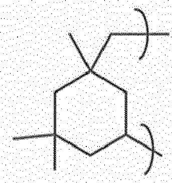 oder 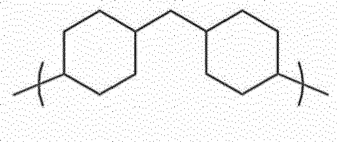 steht,
R¹ für C₁-C₄-Alkyl oder einen Rest -(CH₂)ₕ-O-[(CH₂)ₖ-O]_{g}-R² steht,
mit h = 1-3, k= 1-3, g = 10-12 und R²= H oder C₁-C₄-Alkyl, vorzugsweise CH₃,

In einer weiteren besonders bevorzugten Ausführungsform der Erfindung handelt es sich bei dem Carbodiimid der Formel (I) um eine Verbindung in der
m = 20 ist,
hat R die Bedeutung von C₆-C₁₈-Alkylen oder C₆-C₁₈-Cycloalkylen, vorzugsweise 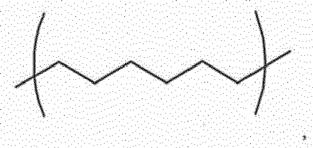 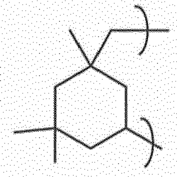 oder 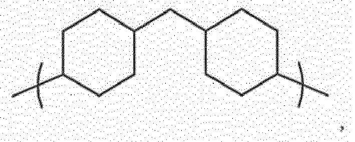 R¹ steht für einen Rest -(CH₂)ₕ-O-[(CH₂)ₖ-O]_{g}-R²,
mit h = 2, k= 2, g = 10-12 und R² steht für CH₃.

Vorzugsweise hat R innerhalb des Carbodiimids der Formel (I) dieselbe Bedeutung.

Bei den Verbindungen der Formel (I) handelt es sich um handelsübliche Stoffe, die z.B. bei der Firma Rhein Chemie Rheinau GmbH z.B. unter dem Handelsnamen Stabaxol®, Hycasyl® erhältlich sind.

Ebenfalls bevorzugt sind Mischungen aus mehreren Carbodiimiden der Formel (I). Im Fall der Mischung können sich bei der Ermittlung des Mittelwertes für m auch gebrochenen Zahlen ergeben.

Bei den Polyolen im Sinne der Erfindung handelt es sich um Verbindungen, die vorzugsweise ein Molekulargewicht in (g/mol) von bis zu 2000, bevorzugt im Bereich von 500 bis 2000 und besonders bevorzugt im Bereich von 500 bis 1000, aufweisen.

Der Begriff Polyol im Sinne der Erfindung umfasst dabei sowohl Verbindungen mit zwei oder drei Hydroxylgruppen je Molekül als auch Verbindungen mit mehr als drei Hydroxylgruppen je Molekül.

Bevorzugte Polyole sind Polyesterpolyole und/oder Polyetheresterpolyole, besonders bevorzugt Polyesterpolyole.

Vorteilhaft ist es, wenn das Polyol eine OH-Zahl von bis zu 200, vorzugsweise zwischen 20 und 150 und besonders bevorzugt zwischen 50 und 115, aufweist.

Insbesondere eignen sich Polyesterpolyole, die Reaktionsprodukte von verschiedenen Diolen mit aromatischen oder aliphatischen Dicarbonsäuren und/oder Polymeren von Lactonen sind.

Bevorzugt hierbei sind aromatische Dicarbonsäuren, welche zur Bildung geeigneter Polyesterpolyole verwendet werden können. Besonders bevorzugt sind hier Terephthalsäure, Isophthalsäure, Phthalsäure, Phtalsäureanhydrid sowie substituierte Dicarbonsäureverbindungen mit Benzolkern.

Als aliphatische Dicarbonsäuren sind solche bevorzugt, welche zur Bildung geeigneter Poylesterpolyole verwendet werden können, besonders bevorzugt Sebacinsäure, Adipinsäure und Glutarsäure.

Als Polymere von Lactonen sind solche bevorzugt, welche zur Bildung geeigneter Poylesterpolyole verwendet werden können, besonders bevorzugt Polycaprolacton.

Sowohl bei den Dicarbonsäuren als auch bei den Polymeren von Lactonen handelt es sich um handelsübliche Substanzen.

Besonders bevorzugt sind auch solche Diole, welche zur Bildung geeigneter Polyesterpolyole verwendet werden können, ganz besonders bevorzugt Ethylenglykol, Butandiol, Neopentylglykol, Hexandiol, Propylenglykol, Dipropylenglykol, Diethylenglykol und Cyclohexandimethanol.

Hierfür sind die Reaktionsprodukte von verschiedenen vorhergehend genannten Polyolen mit aromatischen oder aliphatischen Dicarbonsäuren und/oder Polymeren von Lactonen (z.B. Polycaprolacton) bevorzugt.

Bei den im Sinne der Erfindungen eingesetzten Polyolen handelt es sich um handelsübliche Verbindungen, die bei der Firma Bayer MaterialScience AG unter dem Handelsnamen Desmophen® erhältlich sind.

In einer weiteren Ausführungsform der Erfindung enthält die Zusammensetzung zusätzlich mindestens ein Diisocyanat.

Als Diisocyanate sind aromatische und aliphatische Diisocyanate bevorzugt. Besonders bevorzugt sind Toluol-2,4-diisocyanat, Toluol-2,6-diisocyanat, Phenylendiisocyanat, 4,4-Diphenylmethandiisocyanat, Methylen-bis(4-phenylisocynat), Naphthalen-1,5-diisocyanat, Tetramethylen-1,4.diisocyanat und/oder Hexamethylen-1,6-diisocyanat, ganz besonders bevorzugt Toluol-2,4-diisocyanat und Toluol-2,6-diisocyanat.

Bei den im Sinne der Erfindungen eingesetzten Diisocyanaten handelt es sich um handelsübliche Verbindungen, die bei der Firma Bayer MaterialScience AG unter dem Handelsnamen Desmodur® erhältlich sind.

In einer weiteren Ausführungsform der Erfindung enthält die Zusammensetzung zusätzlich mindestens ein Diamin.

Als Diamine, welche für die Kettenverlängerung eingesetzt werden, sind 2-Methylpropyl-3,5-diamino-4-chlorobenzoat, Bis-(4,4'-amino-3-chlorophenyl)-methan, 3,5-Dimethylthio-2,4-toluylendiamin, 3,5-Dimethylthio-2,4-toluylendiamin, 3,5-Diethyl-2,4-toluylendiamin, 3,5 -Diethyl-2,6-toluylendiamin, 4,4'-Methylen-bis-(3-chloro-2,6-diethylanilin) und 1,3-Propandiol-bis(4-aminobenzoat) bevorzugt.

Bei den im Sinne der Erfindung zur Kettenverlängerung eingesetzten Diaminen handelt es sich um handelsübliche Verbindungen, die bei der Firma Rheinchemie Rheinau GmbH unter dem Handelsnamen Addolink® erhältlich sind.

Das Verhältnis von Carbodiimid zu Polyol beträgt vorzugsweise 0,1-5, besonders bevorzugt 1-3 Gew. Teile auf 100 Gew.-Teile Polyol.

Das Verhältnis von Diisocyanat zu Polyol beträgt vorzugsweise 20 bis 50 zu 100 Gew.-Teile, besonders bevorzugt 30 zu 100 Gew.-Teile.

In den Fällen, in denen die Zusammensetzung neben dem Polyol und dem Carbodiimid sowie dem Diisocyanat zusätzlich mindestens ein Diamin enthält, beträgt die Menge an Diamin 5-30 Gew.%, bezogen auf die Zusammensetzung.

Gegenstand der vorliegenden Erfindung ist zudem die Herstellung der erfindungsgemäßen Zusammensetzung, wonach das Polyol vorgelegt und das Carbodiimid nach Formel (I) oder eine Mischung aus Carbodiimiden nach Formel (I) eingerührt wird.

In den Fällen, in denen die erfindungsgemäße Mischung zusätzlich noch das Diisocyanat enthält wird dieses in die Zusammensetzung aus Polyol und mindestens einem Carbodiimid nach Formel (I) bei Temperaturen zwischen 80 und 130°C eingerührt.

In den Fällen, in denen die erfindungsgemäße Mischung neben dem Diisocyanat zusätzlich noch ein Diamin enthält wird dieses in die Zusammensetzung aus Polyol und mindestens einem Carbodiimid nach Formel (I) und Diisocyanat bei Temperaturen im Bereich von 40 bis 130°C eingerührt.

Die Verwendung der vorbeschriebenen Zusammensetzungen erfolgt vorzugsweise in PU-Elastomeren, Klebstoffen oder Gießharzen zur Steuerung der Topfzeit und/oder als Schutz gegen hydrolytischen Abbau.

Der Rahmen der Erfindung erfasst alle oben stehenden und im Folgenden aufgeführten allgemeinen oder in Vorzugsbereichen genannten Restedefinitionen, Indizes, Parameter und Erläuterungen untereinander, also auch zwischen den jeweiligen Bereichen und Vorzugsbereichen in beliebiger Kombination.

Die nachfolgenden Beispiele dienen der Erläuterung der Erfindung, ohne dabei limitierend zu wirken.

### Ausführungsbeispiele

In den nachfolgenden Beispielen wurden die folgenden Substanzen eingesetzt:
Desmophen® 2000MM, ein lineares Polyesterpolyol mit einer OH-Zahl von 56 mg KOH/g und einer Säurezahl von 0,83 mg KOH/g, der Firma Bayer MaterialScience AG.

Ein Carbodiimid der Formel (I) mit einem durchschnittlichen m von 20, R¹ = -(CH₂)ₕ-O-[(CH₂)ₖ-O]_{g}-R² wobei R²=Methyl, h = 2, k= 2 und g = 10-12 ist.

Stabaxol®P200, ein polymeres aromatisches Carbodiimid auf Basis von Tetramethylxyloldiisocyanat der Firma Rhein Chemie Rheinau GmbH.

Stabaxol® I, ein monomeres Carbodiimid auf Basis von 2,6-Diisopropylphenylisocyanat der Firma Rhein Chemie Rheinau GmbH.

Desmodur® T100, ein 2,4-Toluylendiisocyanat der Firma Bayer Material Science.

Addolink® 1604, ein 2-Methylpropyl-3,5-diamino-4-chlorobenzoat der Firma Rhein Chemie Rheinau GmbH als Diaminkomponente.

Carbodilite® HMV-8 CA: ein polymeres aliphatisches Carbodiimid der Firma Nisshinbo Industries, INC.

Es wurden die folgenden Mischungen wie folgt hergestellt,

Mischung A (Vergleich): 100g Desmophen® 2000MZ wurde bei 100°C aufgeschmolzen.

Mischung B (erfindungsgemäß): 100g Desmophen® 2000MZ wurde bei 100°C aufgeschmolzen und mit 0,6 g des Carbodiimids der Formel (I) mit einem durchschnittlichen m von 20, R¹ = -(CH₂)ₗ-O-[(CH₂)ₖ-O]_{g}-R² wobei R²=Methyl, 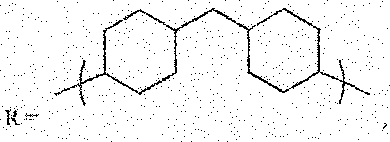 h = 2, k= 2 und g = 10-12 ist versetzt.

Mischung C (Vergleich): 100 g Desmophen® 2000MM wurde bei 100°C aufgeschmolzen und mit 0,6g monomerem Carbodiimid auf Basis von 2,6-Diisopropylphenylisocyanat versetzt.

### Mischung D (Vergleich):

100g des Desmophen® 2000MM wurde mit 0,6g Carbodilite ® HMV-8 CA versetzt und 24h bei 30°C gelagert. Beide Substanzen lassen sich nicht vermischen. Damit war diese Mischung für weitere Versuche nicht einsetzbar.

Alle Angaben sind in Gew.-Teilen, sofern nicht anders ausgewiesen.

**Tabelle 1:**

| **Anteile/ Mischungs -Nr.** | **Mischung A** | **Mischung B** | **Mischung C** | **Desmodur® T100** | **Addolink 1604** |
|---|---|---|---|---|---|
| I (V) | 100 | | | 21 | 16,16 |
| II (erf) | | 100 | | 21 | 16,16 |
| III (V) | | | 100 | 21 | 16,16 |

| | | | | | |
|---|---|---|---|---|---|
| V = Vergleichsbeispiel, erf = erfindungsgemäß | | | | | |

Mischungen A bis C wurden bei Temperaturen von 80°C mit den in der Tabelle 2 angegebenen Mengen an Desmodur® T 100, bis zu einem Isocyanatgehalt von 5% umgesetzt und anschließend mit dem Kettenverlängerer Addolink® 1604 in der mit der in der Tabelle 2 angegebenen Menge zur Reaktion gebracht. Von dem noch flüssigen, nach wenigen Minuten gelierenden, zu einem festen Elastomer reagierenden Gemisch wurde die Topfzeit bestimmt. Die Topfzeit ist die Zeit zwischen dem Anmischen einer mehrkomponentigen Substanz und dem Ende der Verarbeitbarkeit. Die ermittelten Werte sind in Tabelle 3 dargestellt.

**Tabelle 2:**

| **Mischung** | **Topfzeit in Sekunden** |
|---|---|
| I | 240 |
| II | 420 |
| III | 340 |

### Interpretation der Versuchsergebnisse:

Aus dem Wert für Mischung II ist klar ersichtlich, dass die Mischung mit dem erfindungsgemäßen Carbodiimid der Formel (I) mit einem durchschnittlichen m von 20, R¹ = -(CH₂)ₗ-O-[(CH₂)ₖ-O]_{g}-R² wobei R²=Methyl, l = 2, k= 2 und g = 10-12 ist, zu einer deutlich verlängerten Topfzeit und damit zu einer verbesserten Verarbeitbarkeit führt.

## Patentansprüche

1. Verwendung von Zusammensetzungen enthaltend
- mindestens ein Polyol und
- mindestens ein Carbodiimid der Formel (I)
R¹-(O)-OC-HN-(R-N=C=N-)ₘ-R-NH-CO-(O)-R¹ (I),
mit m = 1 - 40,
wobei R für C₆ - C₁₈-Alkylen oder C₆ - C₁₈-Cycloalkylen,
und R¹ für C₁-C₄-Alkyl sowie -(CH₂)ₕ-O-[(CH₂)ₖ-O]_{g}-R² steht, wobei h = 1-3, k= 1-3, g = 5-20 und wobei R² für H oder C₁-C₄-Alkyl steht und mindestens ein Diisocyanat
zur Steuerung der Topfzeit.

2. Verwendung von Zusammensetzungen nach Anspruch 1, **dadurch gekennzeichnet, dass** in dem Carbodiimid der Formel (I) m = 10-30 ist,
R für C₆-C₁₈-Alkylen oder C₆-C₁₈-Cycloalkylen steht,
R¹ für C₁-C₄-Alkyl oder einen Rest -(CH₂)ₕ-O-[(CH₂)ₖ-O]_{g}-R² steht,
mit h = 1-3, k= 1-3, g = 10-12 und wobei R² für H oder C₁-C₄-Alkyl steht

3. Verwendung von Zusammensetzungen nach einem oder mehreren der Ansprüche 1 bis 2, **dadurch gekennzeichnet, dass** es sich bei den Carbodiimiden um Mischungen aus mehreren Carbodiimiden der Formel (I) handelt.

4. Verwendung von Zusammensetzungen nach einem oder mehreren der Ansprüche 1 bis 3, **dadurch gekennzeichnet, dass** es R in den Carbodiimiden der Formel (I) die Bedeutung von 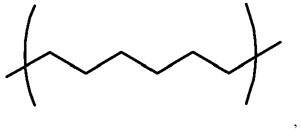 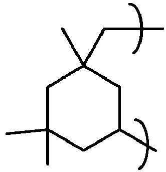 oder 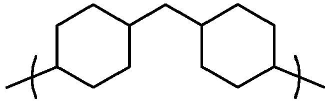 hat,
R¹ für einen Rest -(CH₂)ₕ-O-[(CH₂)ₖ-O]_{g}-R² steht,
mit h = 1-3, vorzugsweise 2, k= 1-3, vorzugsweise 2 und g = 5-20, vorzugsweise 10 - 12 und R² für H oder C₁-C₄-Alkyl, vorzugsweise CH₃, steht.

5. Verwendung von Zusammensetzungen nach einem oder mehreren der Ansprüche 1 bis 4, **dadurch gekennzeichnet, dass** es sich bei dem Polyol um Polyesterpolyole und/oder Polyetheresterpolyole handelt.

6. Verwendung von Zusammensetzungen nach einem oder mehreren der Ansprüche 1 bis 5, **dadurch gekennzeichnet, dass** diese als Diisocyanat Toluol-2,4-diisocyanat, Toluol-2,6-diisocyanat, Phenylendiisocyanat, 4,4-Diphenylmethandiisocyanat, Methylen-bis(4-phenylisocynat), Naphthalen-1,5-diisocyanat, Tetramethylen-1,4-diisocyanat und/oder Hexamethylen-1,6-diisocyanat, bevorzugt Toluol-2,4-diisocyanat und Toluol-2,6-diisocyanat, enthält.

7. Verwendung von Zusammensetzungen nach einem oder mehreren der Ansprüche 1 bis 6, **dadurch gekennzeichnet, dass** diese mindestens einen Katalysator enthält.

8. Verwendung von Zusammensetzungen nach einem oder mehreren der Ansprüche 1 bis 7, **dadurch gekennzeichnet, dass** diese zusätzlich mindestens ein Diamin enthält.

## Claims

1. Use of compositions comprising
- at least one polyol and
- at least one carbodiimide of the formula (I)
R¹-(O)-OC-HN-(R-N=C=N-)ₘ-R-NH-CO-(O)-R¹ (I)
with m = 1 to 40,
where R is C₆-C₁₈-alkylene or C₆-C₁₈-cycloalkylene,
and R¹ is C₁-C₄-alkyl or else -(CH₂)ₕ-O-[(CH₂)ₖ-O]_{g}-R², where
h = 1-3, k = 1-3, g = 5-20, and where R² is H or C₁-C₄-alkyl, and at least one diisocyanate for controlling pot life.

2. Use of compositions according to Claim 1, **characterized in that**, in the carbodiimide of the formula (I), m = 10-30,
R is C₆-C₁₈-alkylene or C₆-C₁₈-cycloalkylene,
R¹ is C₁-C₄-alkyl or a -(CH₂)ₕ-O-[(CH₂)ₖ-O]_{g}-R² radical,
with h = 1-3, k = 1-3, g = 10-12, and where R² is H or C₁-C₄-alkyl.

3. Use of compositions according to one or more of Claims 1 to 2, **characterized in that** the carbodiimides are mixtures of a plurality of carbodiimides of the formula (I).

4. Use of compositions according to one or more of Claims 1 to 3, **characterized in that** R in the carbodiimides of the formula (I) is defined as 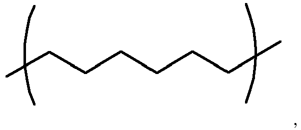 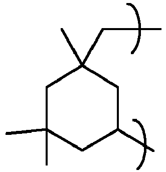 or 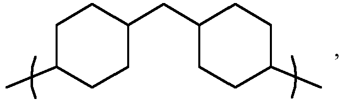 R¹ is a -(CH₂)ₕ-O-[(CH₂)ₖ-O]_{g}-R² radical,
with h = 1-3, preferably 2, k = 1-3, preferably 2, and g = 5-20, preferably 10-12, and R² is H or C₁-C₄-alkyl, preferably CH₃.

5. Use of compositions according to one or more of Claims 1 to 4, **characterized in that** the polyol comprises polyester polyols and/or polyether ester polyols.

6. Use of compositions according to one or more of Claims 1 to 5, **characterized in that** they comprise, as diisocyanate, toluene 2,4-diisocyanate, toluene 2,6-diisocyanate, phenylene diisocyanate, diphenylmethane 4,4-diisocyanate, methylenebis(4-phenyl isocyanate), naphthalene 1,5-diisocyanate, tetramethylene 1,4-diisocyanate and/or hexamethylene 1,6-diisocyanate, preferably toluene 2,4-diisocyanate and toluene 2,6-diisocyanate.

7. Use of compositions according to one or more of Claims 1 to 6, **characterized in that** they comprise at least one catalyst.

8. Use of compositions according to one or more of Claims 1 to 7, **characterized in that** they additionally comprise at least one diamine.

## Revendications

1. Utilisation de compositions contenant :
- au moins un polyol et
- au moins un carbodiimide de formule (I)
R¹-(O)-OC-HN-(R-N=C=N-)ₘ-R-NH-CO-(O)-R¹ (I),
avec m = 1 à 40,
R représentant alkylène en C₆-C₁₈ ou cycloalkylène en C₆-C₁₈,
et R¹ représentant alkyle en C₁-C₄, ainsi que -(CH₂)ₕ-O-[(CH₂)ₖ-O]_{g}-R²,
avec h = 1 à 3, k = 1 à 3, g = 5 à 20, et R² représentant H ou alkyle en C₁-C₄,
et au moins un diisocyanate,
pour l'ajustement de la durée de vie en pot.

2. Utilisation de compositions selon la revendication 1, **caractérisée en ce que**, dans le carbodiimide de formule (I), m = 10 à 30,
R représente alkylène en C₆-C₁₈ ou cycloalkylène en C₆-C₁₈,
R¹ représente alkyle en C₁-C₄ ou un radical -(CH₂)ₕ-O-[(CH₂)ₖ-O]_{g}-R²,
avec h = 1 à 3, k = 1 à 3, g = 10 à 12 et R² représentant H ou alkyle en C₁-C₄.

3. Utilisation de compositions selon une ou plusieurs des revendications 1 à 2, **caractérisée en ce que** les carbodiimides sont des mélanges de plusieurs carbodiimides de formule (I).

4. Utilisation de compositions selon une ou plusieurs des revendications 1 à 3, **caractérisée en ce que** R dans les carbodiimides de formule (I) a la signification 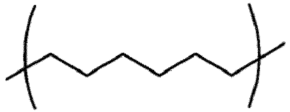 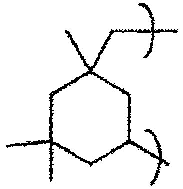 ou 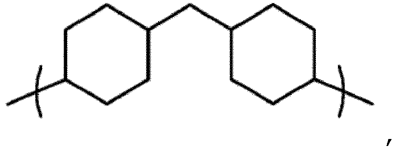 R¹ représente un radical -(CH₂)ₕ-O-[(CH₂)ₖ-O]_{g}-R²,
avec h = 1 à 3, de préférence 2, k = 1 à 3, de préférence 2, et g = 5 à 20, de préférence 10 à 12, et R² représentant H ou alkyle en C₁-C₄, de préférence CH₃.

5. Utilisation de compositions selon une ou plusieurs des revendications 1 à 4, **caractérisée en ce que** le polyol consiste en des polyester-polyols et/ou des polyéther-ester-polyols.

6. Utilisation de compositions selon une ou plusieurs des revendications 1 à 5, **caractérisée en ce que** celles-ci contiennent en tant que diisocyanate du 2,4-diisocyanate de toluène, du 2,6-diisocyanate de toluène, du diisocyanate de phénylène, du diisocyanate de 4,4-diphénylméthane, du méthylène-bis(4-phénylisocyanate), du 1,5-diisocyanate de naphtalène, du 1,4-diisocyanate de tétraméthylène et/ou du 1,6-diisocyanate d'hexaméthylène, de préférence du 2,4-diisocyanate de toluène et du 2,6-diisocyanate de toluène.

7. Utilisation de compositions selon une ou plusieurs des revendications 1 à 6, **caractérisée en ce que** celles-ci contiennent au moins un catalyseur.

8. Utilisation de compositions selon une ou plusieurs des revendications 1 à 7, **caractérisée en ce que** celles-ci contiennent en outre au moins une diamine.
